# EUROPÄISCHE PATENTSCHRIFT

(11) **EP 3 361 069 B1**
(45) Veröffentlichungstag und Bekanntmachung des Hinweises auf die Patenterteilung: **25.12.2019**
(21) Anmeldenummer: 18154363.8
(22) Anmeldetag: 31.01.2018
(51) Int. Cl.: F02B 75/04, F16K 15/02, F16K 15/04

(54) **PLEUEL EINER BRENNKRAFTMASCHINE MIT VARIABLER VERDICHTUNG MIT EINEM RÜCKSCHLAGVENTIL**
CONNECTING ROD OF A COMBUSTION ENGINE WITH VARIABLE COMPRESSION WITH A CHECK VALVE
BIELLE D'UN MOTEUR À COMBUSTION INTERNE PAR COMPRESSION VARIABLE POURVUE D'UNE SOUPAPE DE RETENUE

(30) Priorität: 13.02.2017 DE 102017102791; 15.09.2017 DE 102017121443
(43) Veröffentlichungstag der Anmeldung: 15.08.2018
(73) Patentinhaber: ECO Holding 1 GmbH, 97828 Marktheidenfeld (DE)
(72) Erfinder: Schulze, Dietmar, 35516 Münzenberg (DE); Diehm, Alexander, 97877 Wertheim - Dertingen (DE); Eckrich, Bastian, 97828 Marktheidenfeld (DE)

(56) Entgegenhaltungen:
- WO-A1-2016/103019
- WO-A2-2007/085739
- DE-A1-102012 112 481
- DE-A1-102015 103 205
- DE-B3-102015 001 066
- DE-U1- 20 311 689
- GB-A- 739 930

## Beschreibung

### Technisches Gebiet

Die Erfindung betrifft einen Pleuel einer Brennkraftmaschine mit variabler Verdichtung mit einem Rückschlagventil.

### Stand der Technik

Bei Brennkraftmaschinen wirkt sich ein hohes Verdichtungsverhältnis positiv auf den Wirkungsgrad der Brennkraftmaschine aus. Unter Verdichtungsverhältnis wird im Allgemeinen das Verhältnis des gesamten Zylinderraumes vor der Verdichtung zum verbliebenen Zylinderraum nach der Verdichtung verstanden. Bei Brennkraftmaschinen mit Fremdzündung, insbesondere Ottomotoren, die ein festes Verdichtungsverhältnis aufweisen, darf das Verdichtungsverhältnis jedoch nur so hoch gewählt werden, dass bei Volllastbetrieb ein sogenanntes "Klopfen" der Brennkraftmaschine vermieden wird. Jedoch könnte für den weitaus häufiger auftretenden Teillastbereich der Brennkraftmaschine, also bei geringer Zylinderfüllung, das Verdichtungsverhältnis mit höheren Werten gewählt werden, ohne dass ein "Klopfen" auftreten würde. Der wichtige Teillastbereich einer Brennkraftmaschine kann verbessert werden, wenn das Verdichtungsverhältnis variabel einstellbar ist. Zur Verstellung des Verdichtungsverhältnisses sind beispielsweise Systeme mit variabler Pleuelstangenlänge bekannt, welche mit Hilfe von hydraulischen Umschaltventilen eine Exzenter-Verstelleinrichtung eines Pleuels betätigen.

Ein derartiger Pleuel ist beispielsweise aus der DE 10 2013 107 127 A1 bekannt und umfasst eine Exzenter-Verstelleinrichtung zur Verstellung einer effektiven Pleuelstangenlänge, wobei die Exzenter-Verstelleinrichtung einen mit einem Exzenterhebel zusammenwirkenden Exzenter aufweist, sowie zwei Kolben, welche jeweils in einer Hydraulikkammer verschiebbar geführt sind und in welchen an dem Exzenterhebel angreifende Exzenterstangen der Exzenter-Verstelleinrichtung gelagert sind. Ein Verstellweg der Exzenter-Verstelleinrichtung ist mittels eines Umschaltventils verstellbar. Durch die Änderung des Verstellwegs wird die effektive Pleuelstangenlänge geändert. Damit kann die Verdichtung einer Brennkraftmaschine gesteuert werden. Rückschlagventile im Pleuel verhindern jeweils einen Rückfluss von Hydraulikflüssigkeit aus den Hydraulikkammern zu einem Versorgungsanschluss bzw. einem Tank.

Aus der DE 10 2012 112 481 A1 ist ein hierzu geeignetes Rückschlagventil bekannt.

Aus der WO 2016/103019 A1 ist ein Pleuel umfassend eine Exzenter-Verstelleinrichtung zur Verstellung einer effektiven Pleuelstangenlänge bekannt. Ein Rückschlagventil weist eine federvorgespannte Kugel als Ventilschließkörper auf und ist mit seinem Ventilgehäuse in einen Pleuelkörper des Pleuels angeordnet. Das Ventilgehäuse und der Pleuelkörper sichern den Ventilschließkörper und begrenzen seinen Hub.

Aus der DE 10 2015 103 205 A1 ist ebenfalls ein Pleuel umfassend eine Exzenter-Verstelleinrichtung zur Verstellung einer effektiven Pleuelstangenlänge bekannt, dessen Rückschlagventile eine federvorgespannte Kugel als Ventilschließkörper aufweisen. Ein Deckelelement verschließt das Ventilgehäuse und begrenzt den Hub des Ventilschließkörpers.

Aus der DE 10 2015 001 066 B3 ist ein weiteres Pleuel mit einer Verstelleinrichtung zur Verstellung einer effektiven Pleuelstangenlänge bekannt, dessen Rückschlagventile eine federvorgespannte Kugel als Ventilschließkörper aufweisen. Ein Deckelbauteil sichert den Ventilschließkörper im Pleuelkörper bzw. im Ventilgehäuse und begrenzt den Hub des Ventilschließkörpers.

### Offenbarung der Erfindung

Eine Aufgabe der Erfindung ist es, einen verbesserten, robusten und kostengünstig zu fertigenden Pleuel mit einem Rückschlagventil zu schaffen.

Die vorgenannte Aufgabe wird nach Aspekten der Erfindung gelöst mit den Merkmalen des unabhängigen Anspruchs.

Günstige Ausgestaltungen und Vorteile der Erfindung ergeben sich aus den weiteren Ansprüchen, der Beschreibung und der Zeichnung.

Es wird ein Pleuel einer Brennkraftmaschine mit variabler Verdichtung vorgeschlagen mit wenigstens einer Hydraulikkammer, welche mittels eines Rückschlagventils mit einem Versorgungsanschluss bzw. einer Lagerschale bzw. einem Tank des Pleuels verbindbar ist. Das Rückschlagventil umfasst ein Ventilgehäuse und einen entlang einer Ventillängsachse axial im Ventilgehäuse verschieblichen Ventilschließkörper, welcher an einen Ventilsitz anlegbar und mittels eines Verliersicherungselements verliersicher im Ventilgehäuse angeordnet ist, wobei das Verliersicherungselement den Ventilschließkörper im Ventilgehäuse sichert und einen Hub des Ventilschließkörpers begrenzt.

Erfindungsgemäß ist das Verliersicherungselement stiftförmig vorgesehen und das Ventilgehäuse orthogonal bzw. nahezu orthogonal zur Ventillängsachse durchdringend angeordnet.

Der Einsatz eines stiftförmigen Verliersicherungselements erlaubt eine besonders kostengünstige Ausbildung des Rückschlagventils und weist zudem den Vorteil auf, dass der Durchfluss der Hydraulikflüssigkeit bei geöffnetem Ventil möglichst wenig behindert wird und so der Durchströmungswiderstand des Ventils sich reduzieren lässt. Damit kann ein entscheidender Vorteil gegenüber der üblichen Sicherung von Ventilschließkörpern wie beispielsweise Kugeln erreicht werden, die üblicherweise durch Verschlussdeckel gesichert sind. Die Funktion des Verschlussdeckels kann vorteilhaft durch das Verliersicherungselement erfüllt werden, wodurch die Baugruppenkosten gesenkt werden können.

Der Montageaufwand für ein solches Rückschlagventil lässt sich durch den Einsatz eines Stiftes als Verliersicherungselement reduzieren, da die Einzelteile des Rückschlagventils einfacher gestaltet sind. Weiter tragen vereinfachte Konturen am Ventilgehäuse gegenüber einem herkömmlichen Ventilgehäuse eines Rückschlagventils zu einer Kostenreduzierung bei.

Das stiftförmige Element sichert einerseits den Ventilschließkörper im Ventilgehäuse, ermöglicht dabei gleichzeitig einen Flüssigkeitsdurchfluss durch den Ventilkörper. Zusätzliche Flüssigkeitsdurchlässe im Verliersicherungselement sind dadurch nicht erforderlich. Das stiftförmige Verliersicherungselement kann zweckmäßig mit einer Radialbohrung quer durch das Ventilgehäuse im Ventilgehäuse angeordnet werden.

Das Ventilgehäuse weist eine stufenförmige Längsbohrung umfassend einen ersten Abschnitt mit einem ersten Innendurchmesser und einen zweiten Abschnitt mit einem zweiten Innendurchmesser auf, wobei der erste Innendurchmesser größer als der zweite Innendurchmesser ist. Dabei kann der Ventilschließkörper in dem ersten Abschnitt längsverschieblich angeordnet sein und es kann eine Stufe zwischen den Abschnitten als Ventilsitz vorgesehen sein. Das Ventilgehäuse kann hierdurch hinsichtlich der Konturen wesentlich vereinfacht werden, wodurch eine kostengünstige Herstellung möglich ist. Das Einbringen von Längsbohrungen in das Ventilgehäuse mit verschiedenen Innendurchmessern stellt einen Standard-Fertigungsprozess dar, der zuverlässig und kostengünstig umgesetzt werden kann.

Weiter weist die Längsbohrung insbesondere im Bereich des ersten Abschnittes mit dem größeren Innendurchmesser eine oder mehrere axial verlaufende Ausnehmungen auf, welche am Ventilsitz enden. Auf diese Weise kann ein ausreichender Flüssigkeitsstrom durch das Rückschlagventil gewährleistet werden. Im geöffneten Zustand des Rückschlagventils kann so die Hydraulikflüssigkeit an dem Ventilschließkörper, beispielsweise einer Kugel, mit ausreichendem Durchfluss vorbeifließen, während die Kugel durch den ersten Abschnitt der Längsbohrung in ihrer Bewegung geführt wird und von dem Verliersicherungselement im Hub begrenzt wird. Auch diese Ausnehmungen sind einfach und kostengünstig herstellbar und können beispielsweise ausgefräst sein.

Gemäß einer vorteilhaften Ausgestaltung kann das Verliersicherungselement quer zu einer Bewegungsrichtung des Ventilschließkörpers angeordnet sein. Insbesondere ein stiftförmiges Verliersicherungselement kann in einer solchen Anordnung den Ventilschließkörper geeignet vor einem Verlust schützen, indem er den Hub des Ventilschließkörpers begrenzt und zugleich den Durchfluss von Hydraulikflüssigkeit durch das geöffnete Rückschlagventil möglichst wenig begrenzt. Auch kann das Verliersicherungselement so zuverlässig im Ventilgehäuse montiert werden.

Gemäß einer besonders vorteilhaften Ausführungsform der Erfindung kann das Verliersicherungselement als normierter Zylinderstift ausgebildet sein, welcher formschlüssig im Ventilgehäuse angeordnet werden kann. Der Zylinderstift ist ein besonders kostengünstiges Bauteil. Der Zylinderstift kann dabei beispielsweise gemäß der Norm DIN 6325, bzw. der neuen Norm DIN EN ISO 8734 von März 1998 gefertigt sein. Nach dieser Norm DIN EN ISO 8734 sind beispielsweise Zylinderstifte aus gehärtetem Stahl in einer entsprechenden Toleranzklasse m6 erhältlich.
Das stiftförmige Verliersicherungselement ist dabei nicht auf eine Zylinderform begrenzt. Ebenso sind andere Normteilformen im Rahmen der Erfindung denkbar.

Die Anbringung und Montage eines solchen Normteils kann sehr vorteilhaft sein, da Werkzeuge zur Bearbeitung des Ventilgehäuses wie beispielsweise der Anbringung von Bohrungen für Normteile sowie zur Montage von Normteilen sich günstig beschaffen lassen. So kann das gesamte Rückschlagventil kostengünstig hergestellt werden. Außerdem kann üblicherweise bei Normteilen die Qualität der beschafften Teile gut überwacht und zuverlässig eingehalten werden. So können die Kosten der gesamten Baugruppe vorteilhaft gesenkt werden.

Gemäß einer vorteilhaften Ausgestaltung kann das Verliersicherungselement formschlüssig im Ventilgehäuse angeordnet sein. Im Ventilgehäuse kann beispielsweise eine Radialbohrung quer durch das Ventilgehäuse und damit quer zu der Bewegungsrichtung des Ventilschließkörpers angeordnet sein, in welche der Zylinderstift nach Montage des Ventilschließkörpers im Ventilgehäuse formschlüssig eingepresst werden kann.

Gemäß einer vorteilhaften Ausgestaltung kann das Verliersicherungselement auch alternativ oder zusätzlich stoffschlüssig im Ventilgehäuse angeordnet sein. Das Verliersicherungselement kann beispielsweise in das Ventilgehäuse eingeklebt oder eingeschweißt sein. Es ist auch denkbar, nach Einpressen des Verliersicherungselements in das Ventilgehäuse, also einer formschlüssigen Anordnung im Ventilgehäuse, das Verliersicherungselement zusätzlich zu verkleben oder mit einer Schweißung, beispielsweise dem Setzen eines Schweißpunktes, gegen Lösen aus dem Ventilgehäuse zu sichern.

Gemäß einer vorteilhaften Ausgestaltung kann der Ventilschließkörper als Kugel ausgebildet sein. Auch eine Kugel kann ein Normteil darstellen, wodurch das Rückschlagventil noch einfacher und kostengünstiger herstellbar ist. Kugeln als Normteile sind für vielfältige Anwendungen in verschiedensten Größen erhältlich und beispielsweise gemäß der Norm DIN 5401-1 (November 1993) oder aus Sonderwerkstoffen gemäß der Norm DIN 5401-2 (November 1993) hergestellt.

Gemäß einer vorteilhaften Ausgestaltung kann der Ventilsitz wenigstens bereichsweise kugelkalottenförmig ausgebildet sein. Dadurch kann bei Verwendung einer Kugel als Ventilschließkörper ein besonders sicherer Ventilsitz erreicht werden. Es ist so eine besonders dichte Schließfunktion des Rückschlagventils im geschlossenen Zustand erreichbar. Auch wird das Risiko, dass der Ventilschließkörper sich im Ventilgehäuse verklemmt, dadurch reduziert.

Gemäß einer vorteilhaften Ausgestaltung können mehrere axial verlaufende Ausnehmungen paarweise bezüglich der Ventillängsachse einander gegenüber liegend angeordnet sein. Auf diese Weise kann die Hydraulikflüssigkeit günstig ein symmetrisches Strömungsprofil bezüglich der Ventillängsachse einnehmen. Außerdem kann dadurch auch der Ventilschließkörper, beispielsweise eine Kugel, in ihrer Bewegungsrichtung sicher geführt werden und das Risiko, dass ein Verklemmen der Kugel in der Längsbohrung auftreten kann, wird so deutlich gemindert.

Gemäß einer vorteilhaften Ausgestaltung kann das Ventilgehäuse auf seiner Außenseite ein Außengewinde aufweisen. Durch ein solches Außengewinde kann das Ventilgehäuse zweckmäßig in den Pleuelkörper oder Pleueldeckel eingeschraubt werden und damit sicher montiert werden. Auch ist so eine zuverlässige Abdichtung des Rückschlagventils gegenüber dem Pleuelgrundkörper, beispielsweise durch eine zusätzliche Dichtung, in geeigneter Form möglich.

Alternativ ist auch möglich, dass das Ventilgehäuse in den Pleuelgrundkörper eingepresst wird. Damit kann eine mögliche Leckage an Hydraulikflüssigkeit des Rückschlagventils zuverlässig vermieden werden. Außerdem stellt Einpressen eine sehr kostengünstige Art der Montage des Rückschlagventils in den Pleuel dar.

### Kurze Beschreibung der Zeichnungen

Weitere Vorteile ergeben sich aus der folgenden Zeichnungsbeschreibung. In den Zeichnungen ist ein Ausführungsbeispiel der Erfindung schematisch dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen Pleuel nach einer vorteilhaften Ausgestaltung der Erfindung;
- Fig. 2: eine Draufsicht auf ein Rückschlagventil eines erfindungsgemäßen Pleuels mit eingezeichneter Schnittebene A-A;
- Fig. 3: das Rückschlagventil gemäß Fig. 2 im Längsschnitt A-A mit eingezeichneter Schnittebene C-C;
- Fig. 4: eine perspektivische Darstellung des Rückschlagventils gemäß Fig. 2 und
- Fig. 5: das Rückschlagventil gemäß Fig. 2 im Querschnitt C-C.

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen.

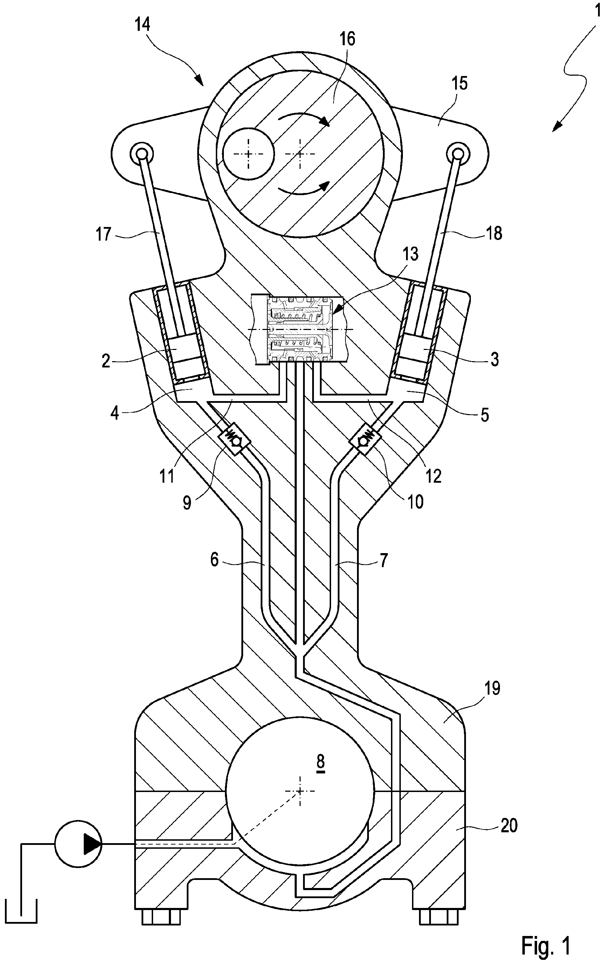

Figur 1 zeigt in schematischer Darstellung einen erfindungsgemäßen Pleuel 1 für eine Brennkraftmaschine mit variabler Verdichtung, mit einer Exzenter-Verstelleinrichtung 14 zur Verstellung einer effektiven Pleuelstangenlänge. Die Exzenter-Verstelleinrichtung 14 weist einen mit einem ein- oder mehrteiligen Exzenterhebel 15 zusammenwirkenden Exzenter 16 auf. Dabei ist ein Verstellweg der Exzenter-Verstelleinrichtung 14 mittels eines Umschaltventils 13 verstellbar.

Eine Verdrehung der verstellbaren Exzenter-Verstelleinrichtung 14 wird durch Einwirken von Massenkräften und Lastkräften der Brennkraftmaschine initiiert, die bei einem Arbeitstakt des Verbrennungsmotors auf die Exzenter-Verstelleinrichtung wirken. Während eines Arbeitstaktes verändern sich die Wirkungsrichtungen der auf die Exzenter-Verstelleinrichtung 14 wirkenden Kräfte kontinuierlich. Die Drehbewegung oder Verstellbewegung wird durch einen oder mehreren mit Hydraulikflüssigkeit, insbesondere mit Motoröl, beaufschlagte, im Pleuel 1 integrierte Kolben 2, 3 unterstützt, bzw. die Kolben 2, 3 verhindern ein Rückstellen der Exzenter-Verstelleinrichtung 14 aufgrund variierender Kraftwirkungsrichtungen der auf die Exzenter-Verstelleinrichtung 14 wirkenden Kräfte.

Die Kolben 2, 3 sind mittels Exzenterstangen 17, 18 beidseitig mit dem Exzenterhebel 15 wirkverbunden. Die Kolben 2, 3 sind in Hydraulikkammern 4, 5 verschiebbar angeordnet und über Hydraulikflüssigkeitsleitungen 6, 7 von dem Hublagerauge 8 aus mit Hydraulikflüssigkeit über Rückschlagventile 9, 10 beaufschlagt, deren Aufbau im nachfolgenden näher erläutert wird. Diese in Figur 1 lediglich schematisch dargestellten Rückschlagventile 9, 10 verhindern ein Rückfließen der Hydraulikflüssigkeit aus den Hydraulikkammern 4, 5 zurück in die Hydraulikflüssigkeitsleitungen 6, 7 in eine Lagerschale des Hublagerauges 8 bzw. einen Tank und ermöglichen ein Nachsaugen von Hydraulikflüssigkeit in die Hydraulikkammern 4, 5. Die Hydraulikkammern 4, 5 sind mit weiteren Hydraulikflüssigkeitsleitungen 11, 12 verbunden, welche mit dem Umschaltventil 13 zusammenwirken. Der Pleuel 1 ist nur beispielhaft dargestellt und beschrieben. Andere Ausgestaltungen des Pleuels 1 bzw. dessen Bauteile sind im Rahmen der Erfindung denkbar. So kann das Umschaltventil 13 wie dargestellt als Hydraulikventil oder alternativ als mechanisch betätigbares Ventil ausgebildet sein. Ebenso ist die dargestellte Anordnung des Umschaltventils 13 im Pleuelkörper 19 und die gezeigte hydraulische Verbindung zwischen Umschaltventil 13 und Hydraulikkammern 4, 5 nicht zwingend. Ebenso denkbar ist die Anordnung des Ventils im Bereich des Hublagerauges 8 bzw. in einem Pleueldeckel 20.

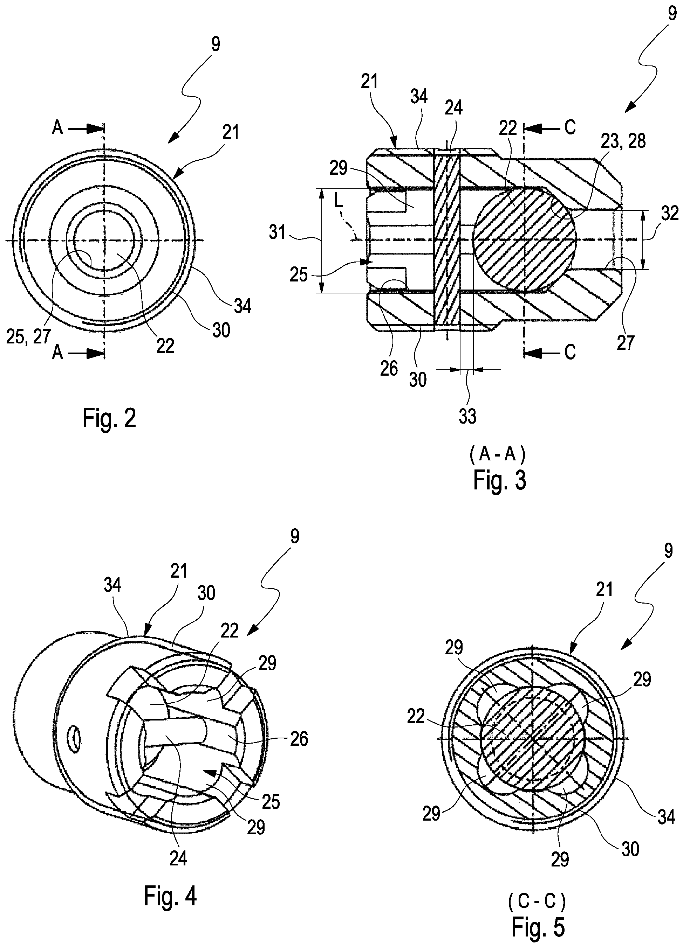

Die Figuren 2 bis 5 zeigen detailliert das erste Rückschlagventil 9 teilweise geschnitten, wobei das zweite Rückschlagventil 10 gleich aufgebaut ist, so dass nachfolgend lediglich das Rückschlagventil 9 beschrieben ist.

Figur 2 zeigt eine Draufsicht auf das Rückschlagventil 9 des erfindungsgemäßen Pleuels 1 mit eingezeichneter Schnittebene A-A. In Figur 3 ist das Rückschlagventil 9 im Längsschnitt A-A mit eingezeichneter Schnittebene C-C dargestellt.

Das Rückschlagventil 9 weist ein topfförmiges Ventilgehäuse 21 und einen entlang einer Ventillängsachse L axial verschieblichen Ventilschließkörper 22 auf, welcher an einen Ventilsitz 23 anlegbar und verliersicher im Ventilgehäuse 21 angeordnet ist. Zur Verliersicherung des Ventilschließkörpers 22 ist ein stiftförmiges Verliersicherungselement 24 vorgesehen, welches den Ventilschließkörper 22 im Ventilgehäuse 21 sichert und zusätzlich einen Hub 33 des Ventilschließkörpers 22 begrenzt, wie aus Figur 3 ersichtlich ist. Das stiftförmige Verliersicherungselement 24 kann vorteilhaft als Normteil ausgebildet sein.

Wie aus Figur 3 weiter ersichtlich ist, ist das Verliersicherungselement 24 stiftförmig ausgebildet und quer zur Bewegungsrichtung des Ventilschließkörpers 22 angeordnet. Der Stift kann vorteilhaft als normierter Zylinderstift ausgebildet sein und nach der Norm DIN EN ISO 8734 (März 1998) gefertigt sein. Das Verliersicherungselement 24 durchdringt dabei das Ventilgehäuse 21 orthogonal bzw. nahezu orthogonal zur Ventillängsachse L. Der Zylinderstift 24 kann formschlüssig im Ventilgehäuse 21 in einer durch das Ventilgehäuse 21 durchgehenden Radialbohrung angeordnet, beispielsweise eingepresst, sein. Alternativ ist auch möglich, den Zylinderstift stoffschlüssig einzukleben oder einzuschweißen, wobei diese Prozesse auch als zusätzliche Sicherung zu einem formschlüssigen Einpressvorgang verwendet werden können.

Der Einsatz eines Normteiles als Verliersicherungselement 24 erlaubt eine besonders kostengünstige Herstellung des Rückschlagventils 9. Das stiftförmige Verliersicherungselement 24 sichert dabei vorteilhafterweise einerseits den Ventilschließkörper 22 im Ventilgehäuse 21, ermöglicht dabei gleichzeitig einen Flüssigkeitsdurchfluss durch den Ventilkörper 21, wodurch zusätzliche Flüssigkeitsdurchlässe im Verliersicherungselement 24 nicht erforderlich sind. Vorzugsweise ist das Verliersicherungselement 24 als Zylinderstift vorgesehen, kann jedoch jedwede Form aufweisen, welche die genannten Funktionen sicher erfüllt. Der Zylinderstift ist jedoch ein besonders kostengünstiges Bauteil und kann zudem in einfacher Weise in das Ventilgehäuse 21 eingebracht und darin formschlüssig befestigt werden.

Der Ventilschließkörper 22 ist als Kugel ausgebildet und stellt damit ebenfalls ein kostengünstiges Normteil dar. Diese ist längsverschieblich in einem ersten Abschnitt 26 einer stufenförmigen Längsbohrung 25 des Ventilgehäuses 21 angeordnet. Die stufenförmige Längsbohrung 25 umfasst einen ersten Abschnitt 26 mit einem ersten Innendurchmesser 31 und einen zweiten Abschnitt 27 mit einem zweiten Innendurchmesser 32 aufweist, wobei der erste Innendurchmesser 31 größer als der zweite Innendurchmesser 32 ist. Eine zur Längsachse L schräg ausgebildete Stufe 28 zwischen diesen beiden Abschnitten 26, 27 dient dabei als Ventilsitz 23 für die Kugel. Der größere Innendurchmesser 31 des ersten Abschnitts 26 entspricht dem Durchmesser der als Ventilschließkörper 22 eingesetzten Kugel mit dem nötigen Spiel, damit die Kugel sich entlang des ersten Abschnitts 26 der Längsbohrung 25 leicht bewegen kann.

Der Ventilsitz 23 kann bei Verwendung einer Kugel als Ventilschließkörper vorteilhaft wenigstens bereichsweise kugelkalottenförmig ausgebildet sein. Damit ist eine sichere Abdichtung des Ventilsitzes durch die angepresste Kugel günstig zu erreichen. Außerdem ist auf Grund der angepassten Kontaktfläche zwischen Kugel und Ventilsitz ein geringerer Verschleiß von Ventilsitz und/oder Kugel erreichbar.

Das Ventilgehäuse 21 ist durch diese Ausgestaltung hinsichtlich der Konturen wesentlich vereinfacht ausgebildet, so dass eine kostengünstige Herstellung möglich ist.

Um einen ausreichenden Flüssigkeitsstrom durch das Rückschlagventil 9 zu gewährleisten, weist die Längsbohrung 25 im Bereich des ersten Abschnittes 26 mehrere axial verlaufende Ausnehmungen 29 auf, welche am Ventilsitz 23 enden. Die Ausnehmungen 29 sind paarweise bezüglich der Ventillängsachse L einander gegenüber liegend angeordnet. Auch diese Ausnehmungen 29 sind einfach und kostengünstig herstellbar. Die Ausnehmungen 29, welche insbesondere in Figur 5 im Querschnitt C-C deutlich erkennbar sind, sind nahezu halbkreisförmig ausgebildet und können einfach mittels eines Bohrverfahrens in das Ventilgehäuse 21 eingebracht werden. Alternativ ist jedoch auch Ausfräsen der Ausnehmungen möglich. Andere Formen der Ausnehmungen 29 sind je nach Herstellungsverfahren im Rahmen der Erfindung denkbar.

Das Rückschlagventil 9 kann in den Pleuelkörper 19 oder den Pleueldeckel 20 eingepresst oder eingeschraubt werden. Wird es eingeschraubt, weist es an seiner Außenseite 34, wie bei dem gezeigten Ausführungsbeispiel insbesondere in den Figuren 3 und 4 zu erkennen, ein Außengewinde 30 auf, welches sich teilweise über eine Länge des Ventilgehäuses 21 erstreckt.

## Patentansprüche

1. Pleuel (1) für eine Brennkraftmaschine mit variabler Verdichtung mit wenigstens einer Hydraulikkammer (4, 5), welche mittels eines Rückschlagventils (9, 10) mit einem Versorgungsanschluss bzw. einer Lagerschale bzw. einem Tank des Pleuels (1) verbindbar ist, wobei das Rückschlagventil (9, 10) ein Ventilgehäuse (21) und einen entlang einer Ventillängsachse (L) axial im Ventilgehäuse verschieblichen Ventilschließkörper (22) umfasst, welcher an einen Ventilsitz (23) anlegbar und mittels eines Verliersicherungselements (24) verliersicher im Ventilgehäuse angeordnet ist, wobei das Verliersicherungselement (24) den Ventilschließkörper (22) im Ventilgehäuse (21) sichert und einen Hub (33) des Ventilschließkörpers (22) begrenzt, wobei das Ventilgehäuse (21) eine stufenförmige Längsbohrung (25) umfassend einen ersten Abschnitt (26) mit einem ersten Innendurchmesser (31) und einen zweiten Abschnitt (27) mit einem zweiten Innendurchmesser (32) aufweist, wobei der erste Innendurchmesser (31) größer als der zweite Innendurchmesser (32) ist, wobei der Ventilschließkörper (22) in dem ersten Abschnitt (26) längsverschieblich angeordnet ist und eine Stufe (28) zwischen den Abschnitten (26, 27) als Ventilsitz (23) vorgesehen ist, **dadurch gekennzeichnet, dass** das Verliersicherungselement (24) stiftförmig vorgesehen und das Ventilgehäuse (21) orthogonal bzw. nahezu orthogonal zur Ventillängsachse (L) durchdringend angeordnet ist und die Längsbohrung (25) im Bereich des ersten Abschnittes (26) eine oder mehrere axial verlaufende Ausnehmungen (29) aufweist, welche am Ventilsitz (23) enden.

2. Pleuel (1) nach Anspruch 1, **dadurch gekennzeichnet, dass** das Verliersicherungselement (24) quer zu einer Bewegungsrichtung des Ventilschließkörpers (22) angeordnet ist.

3. Pleuel (1) nach einem der vorhergehenden Ansprüche, **dadurch gekennzeichnet, dass** das Verliersicherungselement (24) als normierter Zylinderstift ausgebildet ist.

4. Pleuel (1) nach einem der vorhergehenden Ansprüche, **dadurch gekennzeichnet, dass** das Verliersicherungselement (24) formschlüssig im Ventilgehäuse (21) angeordnet ist.

5. Pleuel (1) nach einem der vorhergehenden Ansprüche, **dadurch gekennzeichnet, dass** das Verliersicherungselement (24) stoffschlüssig im Ventilgehäuse (21) angeordnet ist.

6. Pleuel (1) nach einem der vorhergehenden Ansprüche, **dadurch gekennzeichnet, dass** der Ventilschließkörper (22) als Kugel ausgebildet ist.

7. Pleuel (1) nach Anspruch 7, **dadurch gekennzeichnet, dass** der Ventilsitz (23) wenigstens bereichsweise kugelkalottenförmig ausgebildet ist.

8. Pleuel (1) nach Anspruch 1, **dadurch gekennzeichnet, dass** mehrere axial verlaufende Ausnehmungen (29) paarweise bezüglich der Ventillängsachse (L) einander gegenüber liegend angeordnet sind.

9. Pleuel (1) nach einem der vorhergehenden Ansprüche, **dadurch gekennzeichnet, dass** das Ventilgehäuse (21) auf seiner Außenseite (34) ein Außengewinde (30) aufweist.

10. Pleuel (1) nach einem der vorhergehenden Ansprüche, **dadurch gekennzeichnet, dass** das Rückschlagventil (9, 10) in einen Pleuelkörper (19) oder einen Pleueldeckel (20) eingeschraubt oder eingepresst ist.

## Claims

1. Connecting rod (1) for an internal combustion engine with variable compression, having at least one hydraulic chamber (4, 5), which can be connected by means of a check valve (9, 10) to a supply connection or bearing shell or a tank of the connecting rod (1), wherein the check valve (9, 10) comprises a valve housing (21) and a valve closing element (22) which can be displaced axially in the valve housing along a valve longitudinal axis (L), can be applied to a valve seat (23) and is captively arranged in the valve housing by means of a securing element (24), wherein the securing element (24) secures the valve closing element (22) in the valve housing (21) and limits a stroke (33) of the valve closing element (22), wherein the valve housing (21) has a step-like longitudinal bore (25) comprising a first section (26) with a first internal diameter (31) and a second section (27) with a second internal diameter (32), wherein the first internal diameter (31) is greater than the second internal diameter (32), wherein the valve closing element (22) is longitudinally displaceably arranged in the first section (26) and a step (28) is provided as valve seat (23) between the sections (26, 27), **characterized in that** the securing element (24) is provided in the shape of a pin and is arranged to pass through the valve housing (21) orthogonally or virtually orthogonally with respect to the valve longitudinal axis (L), and the longitudinal bore (25) has one or more axially extending recesses (29) in the region of the first section (26), which end on the valve seat (23).

2. Connecting rod (1) according to Claim 1, **characterized in that** the securing element (24) is arranged transversely with respect to a direction of movement of the valve closing element (22).

3. Connecting rod (1) according to one of the preceding claims, **characterized in that** the securing element (24) is formed as a standardized cylindrical pin.

4. Connecting rod (1) according to one of the preceding claims, **characterized in that** the securing element (24) is arranged with a form fit in the valve housing (21).

5. Connecting rod (1) according to one of the preceding claims, **characterized in that** the securing element (24) is arranged integrally in the valve housing (21).

6. Connecting rod (1) according to one of the preceding claims, **characterized in that** the valve closing element (22) is formed as a ball.

7. Connecting rod (1) according to Claim 7, **characterized in that** the valve seat (23) is at least partly formed in the shape of a spherical cap.

8. Connecting rod (1) according to Claim 1, **characterized in that** a plurality of axially extending recesses (29) are arranged opposite one another in pairs with respect to the valve longitudinal axis (L).

9. Connecting rod (1) according to one of the preceding claims, **characterized in that** the valve housing (21) has an external thread (30) on its outer side (34).

10. Connecting rod (1) according to one of the preceding claims, **characterized in that** the check valve (9, 10) is screwed or pressed into a connecting rod body (19) or a connecting rod cap (20) .

## Revendications

1. Bielle (1) pour un moteur à combustion interne par compression variable avec au moins une chambre hydraulique (4, 5), laquelle peut être reliée au moyen d'une soupape de retenue (9, 10) à un raccord d'alimentation ou à un coussinet de palier ou à un réservoir de bielle (1), sachant que la soupape de retenue (9, 10) comprend un boîtier de soupape (21) et un corps de fermeture de soupape (22) axialement mobile dans le boîtier de soupape le long d'un axe longitudinal de soupape (L), lequel peut être posé sur un siège de soupape (23) et est disposé de manière imperdable dans le boîtier de soupape au moyen d'un élément de sécurisation antiperte (24), sachant que l'élément de sécurisation antiperte (24) fixe le corps de fermeture de soupape (22) dans le boîtier de soupape (21) et limite une course (33) du corps de fermeture de soupape (22), sachant que le boîtier de soupape (21) comporte un alésage longitudinal en forme de gradin (25) comprenant une première section (26) avec un premier diamètre intérieur (31) et une deuxième section (27) avec un deuxième diamètre intérieur (32), sachant que le premier diamètre intérieur (31) est plus grand que le deuxième diamètre intérieur (32), sachant que le corps de fermeture de soupape (22) est disposé longitudinalement mobile dans la première section (26) et qu'un gradin (28) est prévu entre les sections (26, 27) en tant que siège de soupape (23), **caractérisée en ce que** l'élément de sécurisation antiperte (24) est prévu en forme de tige et le boîtier de soupape (21) est disposé pénétrant de manière orthogonale ou presqu'orthogonale par rapport à l'axe longitudinal de soupape (L) et l'alésage longitudinal (25) dans la zone de la première section (26) comporte un ou plusieurs évidements (29) passant axialement, lesquels se terminent sur le siège de soupape (23).

2. Bielle (1) selon la revendication 1, **caractérisée en ce que** l'élément de sécurisation antiperte (24) est disposé transversalement à une direction de déplacement du corps de fermeture de soupape (22).

3. Bielle (1) selon l'une quelconque des revendications précédentes, **caractérisée en ce que** l'élément de sécurisation antiperte (24) est constitué comme une tige cylindrique normalisée.

4. Bielle (1) selon l'une quelconque des revendications précédentes, **caractérisée en ce que** l'élément de sécurisation antiperte (24) est disposé par conformité de forme dans le boîtier de soupape (21) .

5. Bielle (1) selon l'une quelconque des revendications précédentes, **caractérisée en ce que** l'élément de sécurisation antiperte (24) est disposé par conformité de matière dans le boîtier de soupape (21) .

6. Bielle (1) selon l'une quelconque des revendications précédentes, **caractérisée en ce que** le corps de fermeture de soupape (22) est constitué sous la forme d'une sphère.

7. Bielle (1) selon la revendication 7, **caractérisée en ce que** le siège de soupape (23) est constitué au moins par zone en forme de calotte sphérique.

8. Bielle (1) selon la revendication 1, **caractérisée en ce que** plusieurs évidements (29) passant axialement sont disposés par paires opposés les uns aux autres par rapport à l'axe longitudinal de soupape (L)

9. Bielle (1) selon l'une quelconque des revendications précédentes, **caractérisée en ce que** le boîtier de soupape (21) comporte un filetage extérieur (30) sur son côté extérieur (34).

10. Bielle (1) selon l'une quelconque des revendications précédentes, **caractérisée en ce que** la soupape de retenue (9, 10) est vissée ou enfoncée dans un corps de bielle (19) ou un chapeau de bielle (20).
